# EUROPEAN PATENT SPECIFICATION

(11) **EP 1 724 209 B1**
(45) Date of publication and mention of the grant of the patent: **11.06.2008**
(21) Application number: 06252487.1
(22) Date of filing: 11.05.2006
(51) Int. Cl.: B65D 81/36, B02C 18/10

(54) **Shredding machine**
Zerkleinerungsmaschine
Appareil broyeur

(30) Priority: 19.05.2005 CN 200510040090
(43) Date of publication of application: 22.11.2006
(73) Proprietor: Suzhou Cleva Electric Appliance Co. Ltd., 215011 Suzhou (CN)
(72) Inventor: Zhao, Kong, 215011 Suzhou (CN)
(74) Representative: Pratt, David Martin

(56) References cited:
- DE-A1- 2 936 654
- DE-A1- 3 112 918
- DE-A1- 3 607 752
- GB-A- 2 324 996
- US-A1- 2004 221 557
- PATENT ABSTRACTS OF JAPAN vol. 2003, no. 12, 5 December 2003 (2003-12-05) -& JP 2006 082011 A (NAKABAYASHI CO LTD), 30 March 2006 (2006-03-30)

## Description

This invention relates to a vegetation shredding machine.

A known shredding machine (shredder) includes a base unit, a shredder mechanism mounted on the base unit, a drive motor and a plurality of cutter blades arranged in the shredder mechanism. The cutter blades are driven to rotate by the drive motor to chip or shred branches, twigs or other garden vegetation. The shredder mechanism is fixed to, and located above the base unit, which results in the shredder being rather large. This in turn leads to transportation costs that are relatively high.

Another known shredder has its shredder mechanism attached above its base unit via a connecting device such as a bolt. Prior to use, the shredder mechanism is not connected to the base unit, and can be stored in the base unit for packaging of the shredder, thereby reducing the package volume. However, before first using this shredder, the shredder mechanism must be mounted above the base unit and this is difficult for one person to accomplish without assistance. Moreover, once assembled this shredder also occupies a relative large space.

An aim of the present invention is to provide a shredder whose shredder mechanism may be readily received into or be adjusted to locate above a base unit thereof.

The technology provided by the present invention is: a shredder, including a base unit, a shredder mechanism mounted above the base unit, the shredder mechanism including a drive motor, a plurality of cutter blades driven to be rotated by the drive motor, characterised in that: the shredder mechanism and the base unit are pivotally connected with each other by a rotation shaft, the shredder mechanism having at least first and second positions, the shredder mechanism being located above the base unit in the first position; and the shredder mechanism being at least partially drawn into the base unit in the second position; a locking device being arranged between the shredder mechanism and the base unit, and the locking device being in a locking status and locking the base unit with the shredder mechanism, when the shredder mechanism is in the first position.

Compared with prior art shredders, this shredder has advantages below: since the shredder mechanism is rotatably connected to the base unit, a user can rotate the shredder mechanism relative to the base unit to draw the shredder mechanism into the base unit; and can rotate the shredder mechanism again so that the shredder mechanism is located above the base unit. The locking device can lock the base unit to the shredder mechanism, thereby being simple in operation, and facilitating the adjustment of the machine by a user.

The present invention provides a vegetation shredding machine as defined in claims.

An advantage of this arrangement is that the overall volume of the shredder is substantially reduced when the shredder mechanism is stored in the container, thereby reducing the size of the product for packaging purposes, and when the product is stored (when not in use) in a shed or garage.

Preferably, the container is open at one end for receiving shredded vegetation and for permitting entry of the shredder mechanism when the shredder mechanism is not in use.

Conveniently, the shredder mechanism is pivotally attached to the base unit.

Advantageously, the machine further comprises a motion damping device for controlling movement of the shredder mechanism between its two positions.

In a preferred embodiment, a spring constitutes the motion damping device, the spring being associated with a pivot shaft which pivotally connects the shredder mechanism to the container, one end of the spring being connected to the shredder mechanism, and the other end of the spring being connected to the base unit.

Alternatively, a hydraulic or pneumatic piston-and-cylinder device constitutes the motion damping device, the piston-and-cylinder device being connected between the shredder mechanism and the base unit.

Preferably, the shredder mechanism is connected to the base unit in such a manner that the shredder mechanism is movable between its first and second positions without physical disconnection from the base unit.

Advantageously, the machine further comprises means for locking the shredder mechanism in at least the first of its positions.

Preferably, the locking means is constituted by a locking pin associated with the shredder mechanism and a locking slot formed in the base unit, the locking pin being engageable with the locking slot when the locking device is in a locked status, and the locking pin being disengaged from the locking slot when the locking device is in an unlocked status.

The shredder mechanism may be provided with counterbalancing means thereby to assist movement of the shredder mechanism between its first and second positions. Conveniently, the counterbalancing means is constituted by the motion damping device.

The machine may further comprise a motor in drivable engagement with the shredder mechanism.

Advantageously, the shredder mechanism is provided with a plurality of cutter blades.

In a preferred embodiment, the base unit is constituted by a frame, a transverse support plate at the upper end of the frame, and the container is a collection box housed within the frame, wherein the support plate is provided with a cut-out through which the shredder mechanism can pass when moving into and out of the container.

The machine may further comprise a handle associated with the shredder mechanism. In this case, the machine may further comprise a cable, one end of which is connected to the handle, and the other end of which is connected to the locking pin, whereby the handle can be operated to move the locking pin out of engagement with the locking slot, so that the shredder mechanism can be moved from its first operating position.

Preferably, the shredder mechanism is provided with a grip which, when the shredder mechanism is in its first position, is located at an upper side portion of the shredder mechanism.

Preferably, the container is made of translucent material.

In a preferred embodiment, the container is provided with handles. Advantageously, the shredding machine further comprises an interlock that has to be disconnected before at least one of the handles can be accessed.

Two forms of shredder, each of which is constructed in accordance with the invention, will now be described, by way of example, with reference to the drawings, in which:-
Fig. 1 is a side view of the first form of shredder and shows its feeder located above its base unit;
Fig. 2 is an end view of the first form of shredder, and shows the feeder located above the base unit;
Fig. 3 is a part-sectional side view of the first form of shredder, and shows the feeder located above the base unit;
Fig. 4 is a side view of the first form of shredder, and shows the feeder partially received in the base unit;
Fig. 5 is a part-sectional side view (taken from the opposite side) of the first form of shredder, and shows the feeder partially received in the base unit;
Fig. 6 is a side view of the first form of shredder, and shows the feeder totally received in the base unit;
Fig. 7 is a part-sectional side view (taken from the opposite side) of the first form of shredder, and shows the feeder totally received in the base unit;
Fig. 8 is a plan view of the first form of shredder, and shows the feeder located above the base unit;
Fig. 9 is a part-sectional end view of a top portion of the first form of shredder, and shows the feeder located above the base unit;
Fig. 10 is a part-sectional underneath view of the first form of shredder, and shows the feeder located above the base unit;
Fig. 11 is a part-sectional side view of the second form of shredder, and shows its feeder located above its base unit;
Fig. 12 is a part-sectional underneath view of the second form of shredder, and shows the feeder located above the base unit; and
Fig. 13 is an enlarged view of the portion A in Fig. 12.

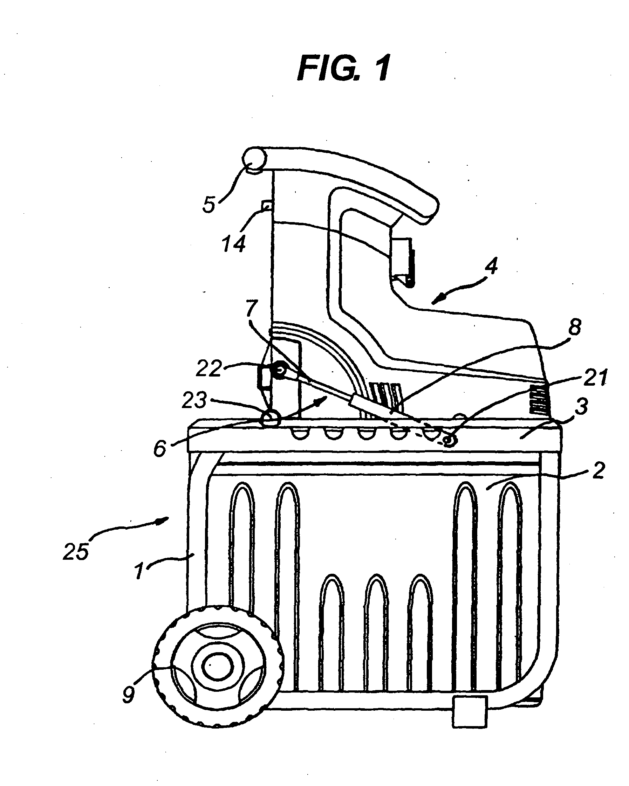

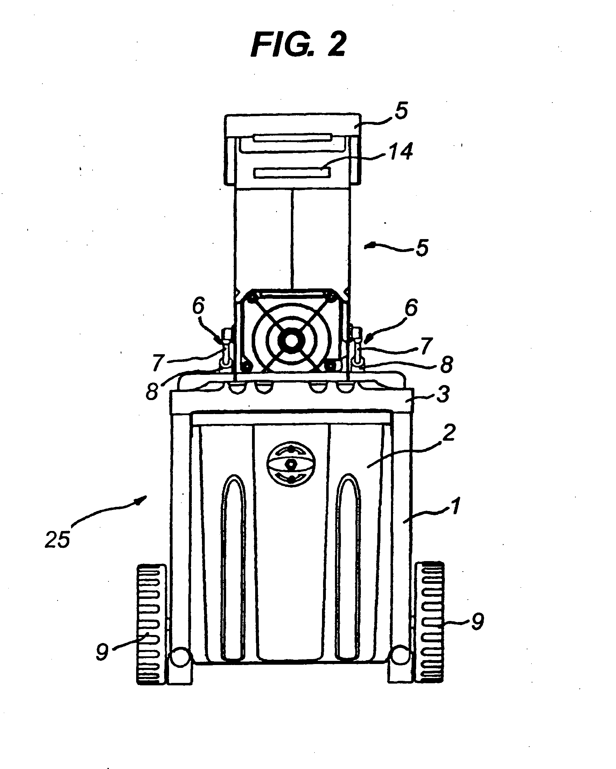

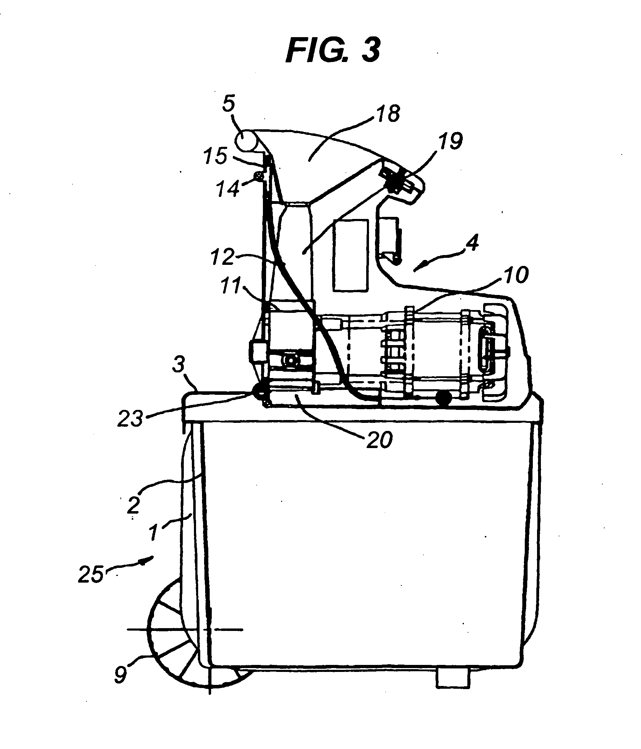

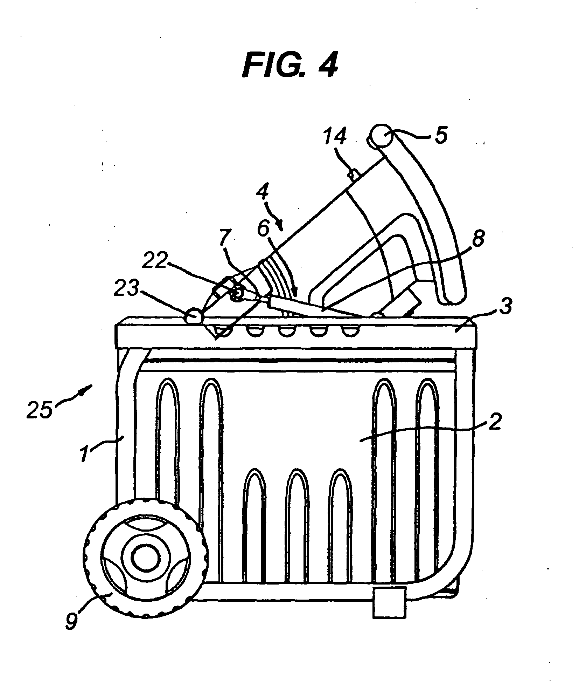

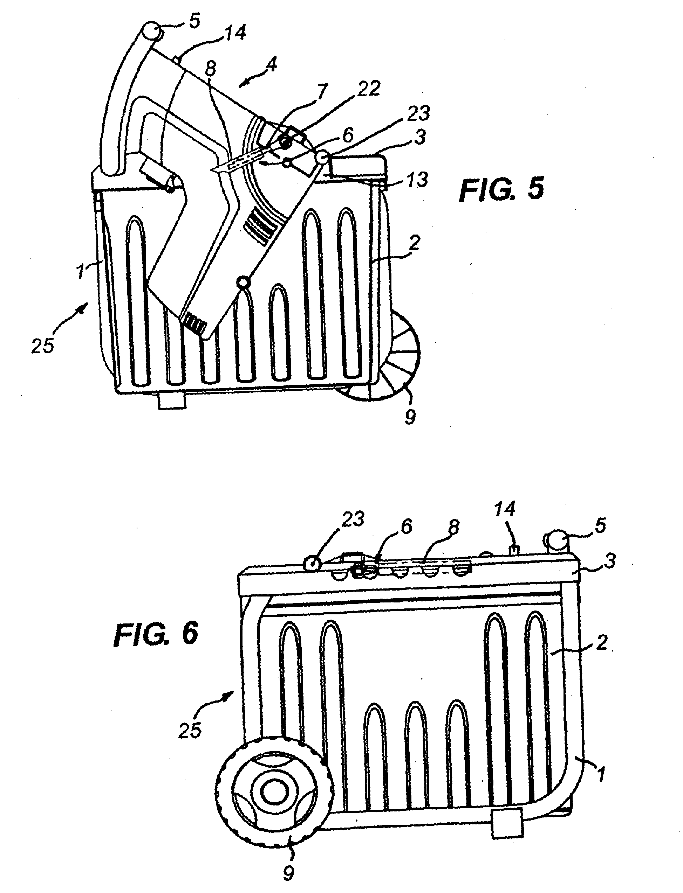

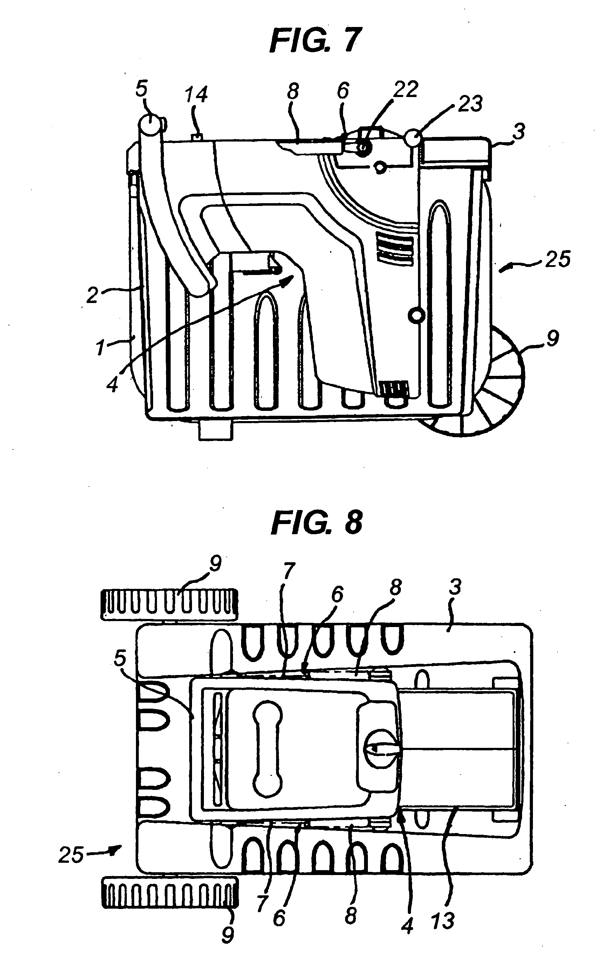

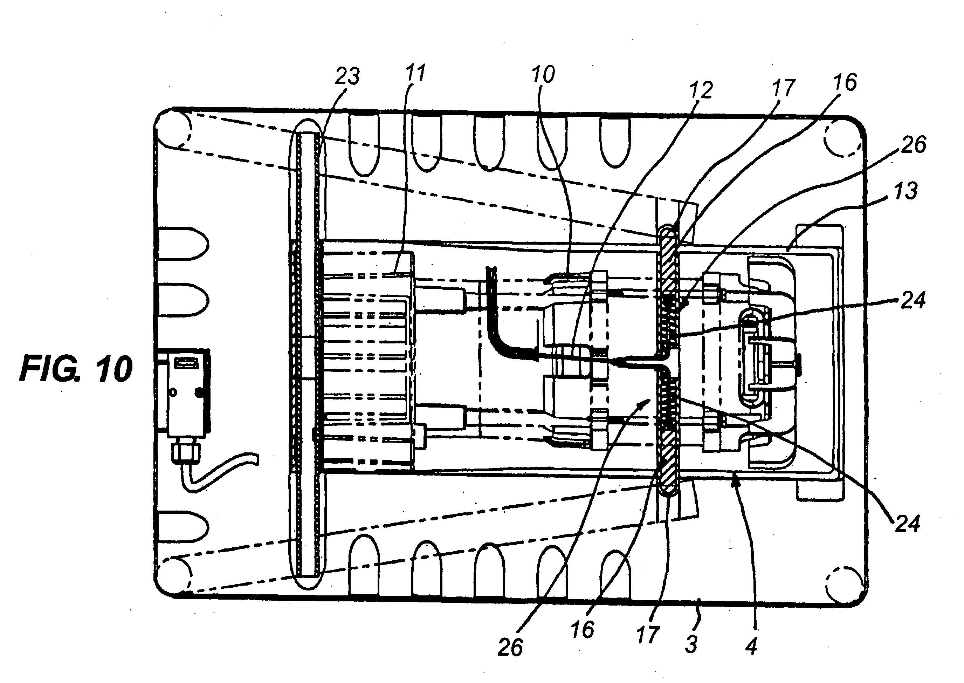

Referring to the drawings, Figures 1 to 10 show a shredder having a base unit 25, and a shredder mechanism 4 mounted above the base unit 25. The shredder mechanism 4 includes a drive motor 10, and a plurality of cutter blades 11 in drivable engagement with the drive motor. The shredder mechanism 4 and the base unit 25 are pivotally connected to one another for rotation about a pivot shaft 23 which is located at a lower corner portion of the shredder mechanism. The shredder mechanism 4 has at least first and second positions. In the first position, the shredder mechanism 4 is located above the base unit 25; and, in the second position, the shredder mechanism is substantially received in the base unit 25. In intermediate positions, the shredder mechanism is partially received in the base unit 25. The base unit 25 houses a vegetation collection box 2 made of translucent material, the shredder mechanism 4 being substantially positioned in the collection box when in the second position. The collection box 2 can only be removed from or positioned in the base unit 25 when the shredder mechanism 4 is in its first position.

A top portion of the shredder mechanism 4 defines an entrance 18 for vegetation to be shredded, and a passageway 19 leads from the entrance to an exit 20 via the cutter blades 11. Vegetation can, therefore, be pushed into the passageway 19 via the entrance 18, for shredding by the cutter blades 11 which are rotatably driven by the drive motor 10. Shredded vegetation then drops into the collection box 2 via the exit 20.

The base unit 25 includes a frame 1, and a transverse support plate 3 fixed to the upper end of the frame 1. The support plate 3 defines a cut-out 13, and the shredder mechanism 4 is pivotally connected to the support plate in such a manner that the shredder mechanism passes through the cut-out when it moves between its two positions. Pivoting the shredder mechanism 4 relative to the base unit 25 to pass the shredder mechanism through the cut-out 13 and into the collection box 25, not only reduces the size of the shredder when packaged, but also protects the shredder mechanism when the shredder is in its second (out of use) position.

A buffer device 6 is arranged between the shredder mechanism 4 and the base unit 25, the buffer device of Figures 1 to 10 being a pneumatic (gas strut) device. Alternatively, the buffer device 6 is a hydraulic piston-and-cylinder device. The gas strut device 6 includes a cylinder 8 and a piston 7 reciprocally mounted in the cylinder. One of the cylinder 8 and the piston 7 is pivotally attached to the base unit 25, and the other of these items is pivotally attached to the shredder mechanism 4.

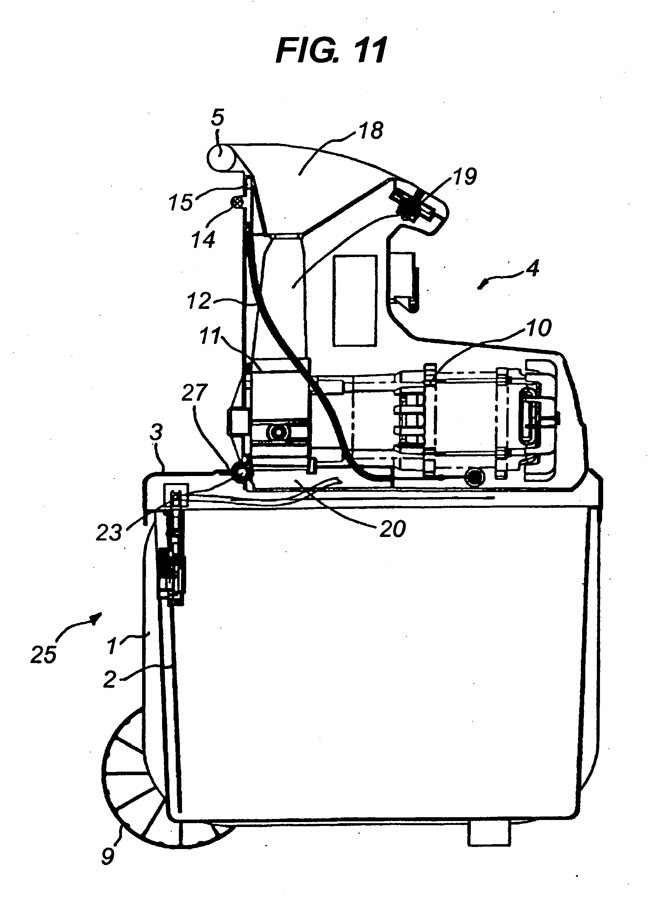

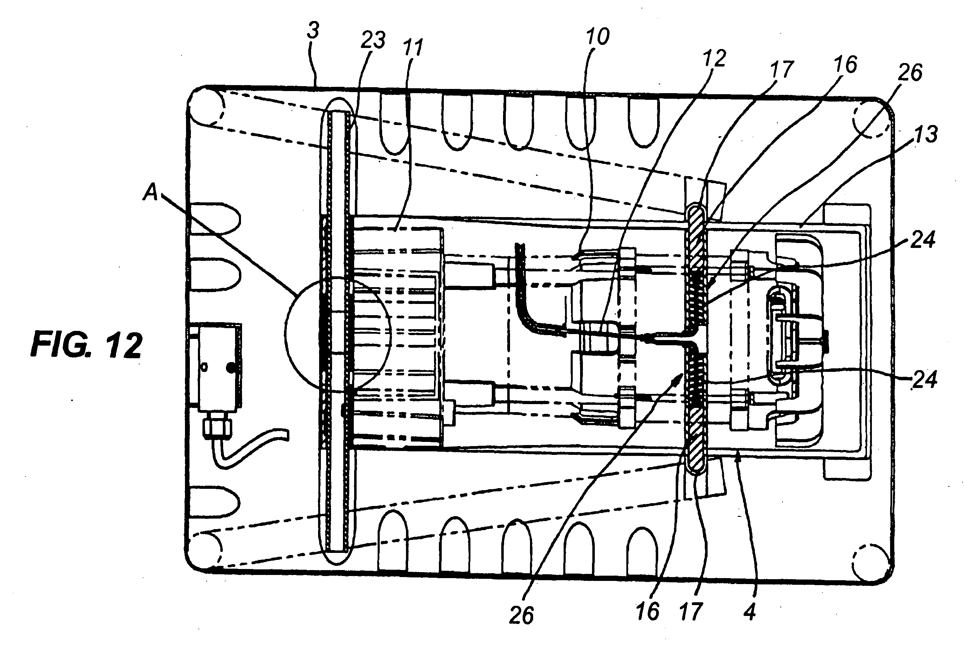

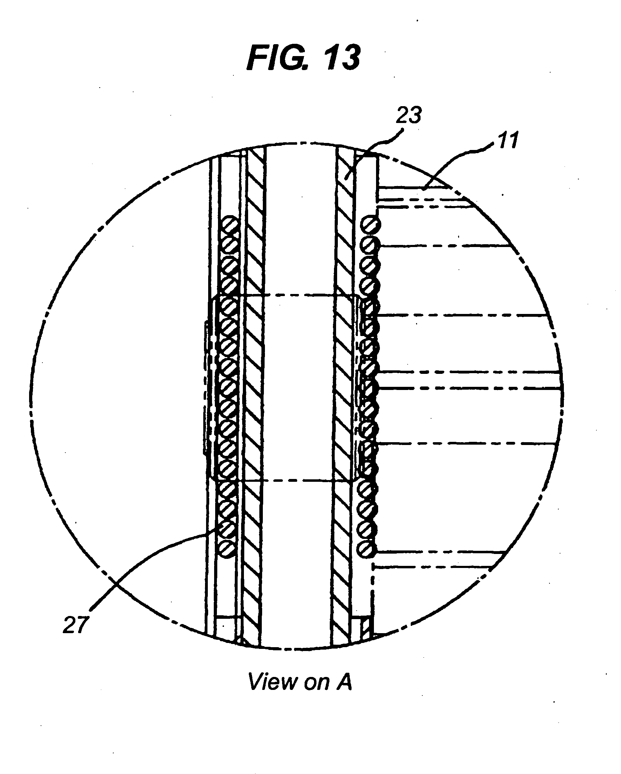

In the shredder of Figures 11 to 13, the buffer device is a torsion spring 27 associated with the pivot shaft 23, one end of the torsion spring being connected to the feeder 4, and the other end of the torsion spring being connected to the base unit 25.

In either case, the buffer device 6 reduces the speed of the shredder mechanism 4 when its position is changed from the first position to the second position, thereby preventing the shredder mechanism from moving downwards suddenly, which could damage the shredder mechanism.

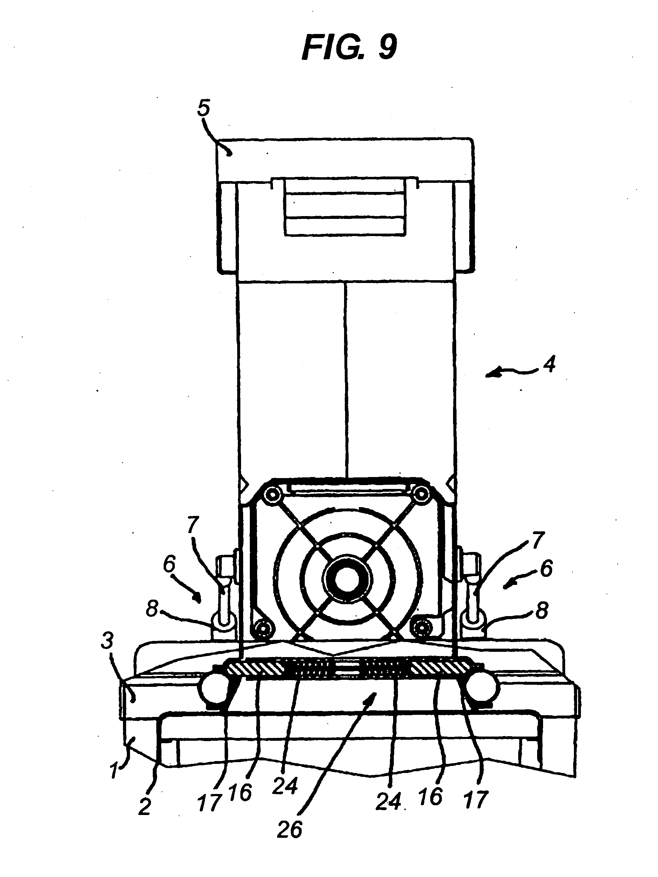

A locking device 26 (see Figure 9) is arranged between the shredder mechanism 4 and the base unit 25, to lock the base unit to the shredder mechanism when the shredder mechanism is in its first position. The locking device 26 includes a locking pin 14 disposed at the bottom of the shredder mechanism 4, and a locking slot 17 formed in the base unit 25. A spring 24 is arranged between the locking pin 16 and the feeder 4. The locking pin 16 is inserted into the locking slot 17 when the locking device 26 is in a locked status, and the locking pin is disengaged from the locking slot when the locking device is in an unlocked status.

The shredder mechanism 4 is provided with a handle 14, a cable 12 connecting the handle and the locking pin 16. Pulling the handle 14 results in the cable 12 pulling the locking pin 16, overcoming the resilient force of the spring 24, and thereby disengaging the locking pin from the locking slot 17. The shredder mechanism 4 can then pivot relative to the base unit 25 for movement into the collection box 2. When the shredder mechanism 4 is pivoted to return to its first position, the locking pin 16 is inserted into the locking slot 17 by the resilient force of the spring 24, so that the locking device 26 automatically locks the shredder mechanism to the base unit 25.

The shredder mechanism 4 is provided with a manually-engageable grip 5 to facilitate operation of the shredder mechanism 4 by a user when the shredder mechanism is in the first position. The grip 5 is located at an upper side portion of the shredder mechanism 4 above the handle 14. Thus, the user may grip the knob 5 to pivot the shredder mechanism 4. At the same time, the user can operate the handle 14 to unlock the locking device 26. When the shredder mechanism 4 is in the second position, the user can pull the grip 5 upwards, to force the shredder mechanism back to the first position.

The shredder of Figures 11 to 13 is a modified version of the shredder of Figures 1 to 10, so like reference numbers are used for like parts, and only the modifications are described in detail (basically the provision of the spring 24 in place of the pneumatic or hydraulic buffer device). The shredder of Figures 11 to 13 also includes the locking device 26.

The translucent collection box 2 ensures that a user of the machine can easily see how full the box is, thereby preventing unnecessary removal of the box to check the level of shredded vegetation. The translucent box 2 also ensures that a customer buying the machine can easily see that it does contain a shredder mechanism 4.

The collection box 2 is provided with handles (not shown) which can be gripped by a user for removal of the box from the base unit 25. An interlock (not shown) is also provided. The interlock must be disconnected before at least one of the handles can be accessed, thereby ensuring that the shredder mechanism 4 has stopped before the box can be removed.

## Claims

1. A vegetation shredding machine comprising a base unit (25), a shredder mechanism (4) for shredding vegetation, and a container (2) for collecting shredded vegetation, wherein the container is sized and shaped to permit storage of the shredder mechanism when the shredder mechanism is not in use, **characterized in that** the shredder mechanism is attached to the base unit for movement between a first, operating position, in which the shredder mechanism lies above the open end of the container, and a second, storage position, in which the shredder mechanism is accommodated within the container.

2. A vegetation shredding machine as claimed in claim 1, wherein the container (2) is open at one end for receiving shredded vegetation and for permitting entry of the shredder mechanism (4) when the shredder mechanism is not in use.

3. A shredding machine as claimed in claim 1 or claim 2, wherein the shredder mechanism (4) is pivotally attached to the base unit (25).

4. A shredding machine as claimed in claim 3, further comprising a motion damping device (6) for controlling movement of the shredder mechanism (4) between its two positions.

5. A shredding machine as claimed in claim 4, wherein a spring (27) constitutes the motion damping device, the spring being associated with a pivot shaft (23) which pivotally connects the shredder mechanism to the container (25), one end of the spring being connected to the shredder mechanism, and the other end of the spring being connected to the base unit (25).

6. A shredding machine as claimed in claim 4, wherein a hydraulic or pneumatic piston-and-cylinder device (6) constitutes the motion damping device, the piston-and-cylinder device being connected between the shredder mechanism (4) and the base unit (25).

7. A shredding machine as claimed in any one of claims 1 to 6, wherein the shredder mechanism (4) is connected to the base unit (25) in such a manner that the shredder mechanism is movable between its first and second positions without physical disconnection from the container (2).

8. A shredding machine as claimed in any one of claims 1 to 7, further comprising means (26) for locking the shredder mechanism (4) in at least the first of its positions.

9. A shredding machine as claimed in claim 8, wherein the locking means is constituted by a locking pin associated with the shredder mechanism (4) and a locking slot (17) formed in the base unit (25), the locking pin being engageable with the locking slot when the locking device is in a locked status, and the locking pin being disengaged from the locking slot when the locking device is in an unlocked status.

10. A shredding machine as claimed in any one of claims 1 to 9, wherein the shredder mechanism (4) is provided with counterbalancing means thereby to assist movement of the shredder mechanism between its first and second positions.

11. A shredding machine as claimed in 10 when appendant to claim 3 or claim 4, wherein the counterbalancing means is constituted by the motion damping device (6).

12. A shredding machine as claimed in any one of claims 1 to 11, further comprising a motor in drivable engagement with the shredder mechanism (4).

13. A shredding machine as claimed in any one of claims 1 to 12, wherein the shredder mechanism (4) is provided with a plurality of cutter blades (11).

14. A shredding mechanism as claimed in any one of claims 1 to 13, wherein the base unit (25) is constituted by a frame (1), a transverse support plate (3) at the upper end of the frame, and the container is a collection box (2) housed within the frame, wherein the support plate is provided with a cut-out (13) through which the shredder mechanism (4) can pass when moving into and out of the container.

15. A shredding machine as claimed in any one of claims 1 to 14, further comprising a handle (14) associated with the shredder mechanism (4).

16. A shredding machine as claimed in claim 15 when appendant to claim 9, further comprising a cable (12), one end of which is connected to the handle (14), and the other end of which is connected to the locking pin (16), whereby the handle can be operated to move the locking pin out of engagement with the locking slot (17), so that the shredder mechanism (4) can be moved from its first operating position.

17. A shredding machine as claimed in any one of claims 1 to 16, wherein the shredder mechanism (4) is provided with a grip (5) which, when the shredder mechanism is in its first position, is located at an upper side portion of the shredder mechanism.

18. A shredding machine as claimed in any one of claims 1 to 17, wherein the container (2) is made of translucent material.

19. A shredding machine as claimed in any one of claims 1 to 18, wherein the container (2) is provided with handles.

20. A shredding machine as claimed in claim 19, further comprising an interlock that has to be disconnected before at least one of the handles can be accessed.

## Patentansprüche

1. Vegetationszerkleinerungsmaschine mit einer Basiseinheit (25), einem Schreddermechanismus (4) zum Zerkleinern von Vegetation und einem Behälter (2) zum Sammeln der zerkleinerten Vegetation, wobei der Behälter zum Ermöglichen einer Aufbewahrung des Schreddermechanismus dimensioniert und geformt ist, wenn der Schreddermechanismus sich nicht in Verwendung befindet,
**dadurch gekennzeichnet,**
**dass** der Schreddermechanismus an der Basiseinheit für eine Bewegung zwischen einer ersten Betriebsstellung, in welcher der Schreddermechanismus oberhalb des offenen Endes des Behälters liegt, und einer zweiten Aufbewahrungsstellung angebracht ist, in welcher der Schreddermechanismus innerhalb des Behälters aufgenommen ist.

2. Vegetationszerkleinerungsmaschine nach Anspruch 1, **dadurch gekennzeichnet, dass** der Behälter (2) an einem Ende zum Aufnehmen geschredderter Vegetation und zum Ermöglichen des Eintritts des Schreddermechanismus (4) offen ist, wenn der Schreddermechanismus sich nicht in Verwendung befindet.

3. Zerkleinerungsmaschine nach Anspruch 1 oder 2, **dadurch gekennzeichnet, dass** der Schreddermechanismus (4) verschwenkbar an der Basiseinheit (25) angebracht ist.

4. Zerkleinerungsmaschine nach Anspruch 3, **dadurch gekennzeichnet, dass** die Maschine ferner eine Bewegungsdämpfungseinrichtung (6) zum Steuern der Bewegung des Schreddermechanismus (4) zwischen seinen beiden Stellungen aufweist.

5. Zerkleinerungsmaschine nach Anspruch 4, **dadurch gekennzeichnet, dass** eine Feder (27) die Bewegungsdämpfungseinrichtung bildet, wobei die Feder mit einer Drehachse (23) verbunden ist, welche den Schreddermechanismus verschwenkbar mit dem Behälter (2) verbindet, wobei ein Ende der Feder mit dem Schreddermechanismus und das andere Ende der Feder mit der Basiseinheit (25) verbunden ist.

6. Zerkleinerungsmaschine nach Anspruch 4, **dadurch gekennzeichnet, dass** eine hydraulische oder pneumatische Kolben- Zylinder-Einrichtung (6) die Bewegungsdämpfungseinrichtung bildet, wobei die Kolben- Zylinder-Einrichtung zwischen dem Schreddermechanismus (4) und der Basiseinheit (25) verbunden ist.

7. Zerkleinerungsmaschine nach wenigstens einem der Ansprüche 1 bis 6, **dadurch gekennzeichnet, dass** der Schreddermechanismus (4) mit der Basiseinheit (25) derart verbunden ist, dass der Schreddermechanismus zwischen seinen ersten und zweiten Stellungen ohne physische Abnahme von dem Behälter (2) bewegbar ist.

8. Zerkleinerungsmaschine nach wenigstens einem der Ansprüche 1 bis 7, **dadurch gekennzeichnet, dass** die Maschine ferner Mittel (26) zum Verriegeln des Schreddermechanismus (4) in wenigstens der ersten seiner Stellungen aufweist.

9. Zerkleinerungsmaschine nach Anspruch 8, **dadurch gekennzeichnet, dass** das Verriegelungsmittel als Verriegelungsstift, welcher mit dem Schreddermechanismus (4) verbunden ist, und Verriegelungsschlitz (17) ausgebildet ist, welcher in der Basiseinheit (25) gebildet ist, wobei der Verriegelungsstift mit dem Verriegelungsschlitz in Eingriff bringbar ist, wenn die Verriegelungseinrichtung sich in einem Verriegelungszustand befindet, und der Verriegelungsstift sich von dem Verriegelungsschlitz außer Eingriff befindet, wenn die Verriegelungseinrichtung sich in einem entriegelten Zustand befindet.

10. Zerkleinerungsmaschine nach wenigstens einem der Ansprüche 1 bis 9, **dadurch gekennzeichnet, dass** der Schreddermechanismus (4) mit einem Gegengewichtsmittel ausgestattet ist, um **dadurch** die Bewegung des Schreddermechanismus zwischen seinen ersten und zweiten Stellungen zu unterstützen.

11. Zerkleinerungsmaschine nach Anspruch 10, wenn rückbezogen auf Anspruch 3 oder 4, **dadurch gekennzeichnet, dass** das Gegengewichtsmittel durch die Bewegungsdämpfungseinrichtung (6) gebildet ist.

12. Zerkleinerungsmaschine nach wenigstens einem der Ansprüche 1 bis 11, **dadurch gekennzeichnet, dass** die Maschine ferner einen Motor aufweist, der sich in einem antreibbaren Eingriff mit dem Schreddermechanismus (4) befindet.

13. Zerkleinerungsmaschine nach wenigstens einem der Ansprüche 1 bis 12, **dadurch gekennzeichnet, dass** der Schreddermechanismus (4) mit einer Mehrzahl an Schneidklingen (11) ausgebildet ist.

14. Schreddermechanismus nach wenigstens einem der Ansprüche 1 bis 13, **dadurch gekennzeichnet, dass** die Basiseinheit (25) durch einen Rahmen (1) und eine quer verlaufende Trägerplatte (3) an dem oberen Ende des Rahmens ausgebildet ist, und dass der Behälter eine Aufnahmebox (2) bildet, die innerhalb des Rahmens aufgenommen ist, wobei die Trägerplatte mit einem Ausschnitt (13) ausgebildet ist, durch welche der Schreddermechanismus (4) hindurchtreten kann, wenn er sich aus dem Behälter heraus und in den Behälter hinein bewegt.

15. Zerkleinerungsmaschine nach wenigstens einem der Ansprüche 1 bis 14, **dadurch gekennzeichnet, dass** die Maschine ferner einen Hebel (14) aufweist, der mit dem Schreddermechanismus (4) verbunden ist.

16. Zerkleinerungsmaschine nach Anspruch 15, wenn rückbezogen auf Anspruch 9, **dadurch gekennzeichnet, dass** die Maschine ferner ein Kabel (12) aufweist, von welchem ein Ende mit dem Hebel (14) und das andere Ende mit dem Verriegelungsstift (16) verbunden ist, wodurch der Hebel zum Bewegen des Verriegelungsstiftes außer Eingriff mit dem Verriegelungsschlitz (17) betätigbar ist derart, dass der Schreddermechanismus (4) von seiner ersten Betriebsstellung aus bewegbar ist.

17. Zerkleinerungsmaschine nach wenigstens einem der Ansprüche 1 bis 16, **dadurch gekennzeichnet, dass** der Schreddermechanismus (4) mit einem Griff (5) ausgebildet ist, welcher an einem oberen Seitenabschnitt des Schreddermechanismus angeordnet ist, wenn sich der Schreddermechanismus in seiner ersten Stellung befindet.

18. Zerkleinerungsmaschine nach wenigstens einem der Ansprüche 1 bis 17, **dadurch gekennzeichnet, dass** der Behälter (2) aus einem durchsichtigen Material hergestellt ist.

19. Zerkleinerungsmaschine nach wenigstens einem der Ansprüche 1 bis 18, **dadurch gekennzeichnet, dass** der Behälter (2) mit Griffen ausgebildet ist.

20. Zerkleinerungsmaschine nach Anspruch 19, **dadurch gekennzeichnet, dass** die Maschine ferner eine Verriegelung aufweist, welche zu entriegeln ist, bevor Zugang zu wenigstens einem der Griffe besteht.

## Revendications

1. Broyeur de végétation comprenant une unité de base (25), un mécanisme broyeur (4) pour broyer la végétation, et un conteneur (2) pour collecter la végétation broyée, dans lequel le conteneur est dimensionné et formé pour permettre le stockage du mécanisme broyeur lorsque le mécanisme broyeur n'est pas utilisé, **caractérisé en ce que** le mécanisme broyeur est fixé à l'unité de base pour le mouvement entre une première position opérationnelle dans laquelle le mécanisme broyeur se trouve au-dessus de l'extrémité ouverte du conteneur, et une seconde position de stockage dans laquelle un mécanisme broyeur est logé à l'intérieur du conteneur.

2. Broyeur de végétation selon la revendication 1, dans lequel le conteneur (2) est ouvert au niveau d'une extrémité pour recevoir la végétation broyée et pour permettre l'entrée du mécanisme broyeur (4) lorsque le mécanisme broyeur n'est pas utilisé.

3. Broyeur selon la revendication 1 ou la revendication 2, dans lequel le mécanisme broyeur (4) est fixé de manière pivotante à l'unité de base (25).

4. Broyeur selon la revendication 3, comprenant en outre un dispositif d'amortissement de mouvement (6) pour contrôler le mouvement du mécanisme broyeur (4) entre ses deux positions.

5. Broyeur selon la revendication 4, dans lequel un ressort (27) constitue le dispositif d'amortissement de mouvement, le ressort étant associé à un arbre de pivot (23) qui raccorde de manière pivotante le mécanisme broyeur au conteneur (25), une extrémité du ressort étant raccordée au mécanisme broyeur, et l'autre extrémité du ressort étant raccordée à l'unité de base (25).

6. Broyeur selon la revendication 4, dans lequel un dispositif de piston et de cylindre hydraulique ou pneumatique (6) constitue le dispositif d'amortissement de mouvement, le dispositif de piston et de cylindre étant raccordé entre le mécanisme broyeur (4) et l'unité de base (25).

7. Broyeur selon l'une quelconque des revendications 1 à 6, dans lequel le mécanisme broyeur (4) est raccordé à l'unité de base (25) de sorte que le mécanisme broyeur est mobile entre ses première et seconde positions sans déconnexion physique du conteneur (2).

8. Broyeur selon l'une quelconque des revendications 1 à 7, comprenant en outre des moyens (26) pour bloquer le mécanisme broyeur (4) dans au moins la première de ses positions.

9. Broyeur selon la revendication 8, dans lequel les moyens de blocage sont constitués par une broche de blocage associée au mécanisme broyeur (4) et une fente de blocage (17) formée dans l'unité de base (25), la broche de blocage pouvant se mettre en prise avec la fente de blocage lorsque le dispositif de blocage est dans un état bloqué, et la broche de blocage étant dégagée de la fente de blocage lorsque le dispositif de blocage est dans un état débloqué.

10. Broyeur selon l'une quelconque des revendications 1 à 9, dans lequel le mécanisme broyeur (4) est doté de moyens de contrepoids pour aider ainsi le mouvement du mécanisme broyeur entre ses première et seconde positions.

11. Broyeur selon la revendication 10, lorsqu'elle dépend de la revendication 3 ou de la revendication 4, dans lequel les moyens de contrepoids sont constitués par le dispositif d'amortissement de mouvement (6).

12. Broyeur selon l'une quelconque des revendications 1 à 11, comprenant en outre un moteur mis en prise par entraînement avec le mécanisme broyeur (4).

13. Broyeur selon l'une quelconque des revendications 1 à 12, dans lequel le mécanisme broyeur (4) est doté d'une pluralité de lames de coupe (11).

14. Broyeur selon l'une quelconque des revendications 1 à 13, dans lequel l'unité de base (25) est constituée par un châssis (1), une plaque de support transversale (3) au niveau de l'extrémité supérieure du châssis, et le conteneur est une boîte de collecte (2) logée à l'intérieur du châssis, dans lequel la plaque de support est dotée d'une découpe (13) à travers laquelle le mécanisme broyeur (4) peut passer lorsqu'il entre et sort du conteneur.

15. Broyeur selon l'une quelconque des revendications 1 à 14, comprenant en outre une poignée (14) associée au mécanisme broyeur (4).

16. Broyeur selon la revendication 15, lorsqu'elle dépend de la revendication 9, comprenant en outre un câble (12), dont une extrémité est raccordée à la poignée (14), et dont l'autre extrémité est raccordée à la broche de blocage (16), moyennant quoi la poignée peut être actionnée pour déplacer la broche de blocage hors de mise en prise d'avec la fente de blocage (17), de sorte que le mécanisme broyeur (4) peut être déplacé à partir de sa première position opérationnelle.

17. Broyeur selon l'une quelconque des revendications 1 à 16, dans lequel le mécanisme broyeur (4) est doté d'une poignée de préhension (5) qui, lorsque le mécanisme broyeur est dans sa première position, est située au niveau d'une partie latérale supérieure du mécanisme broyeur.

18. Broyeur selon l'une quelconque des revendications 1 à 17, dans lequel le conteneur (2) est réalisé avec un matériau translucide.

19. Broyeur selon l'une quelconque des revendications 1 à 18, dans lequel le conteneur (2) est doté de poignées.

20. Broyeur selon la revendication 19, comprenant en outre un verrouillage qui doit être déconnecté avant que l'on puisse avoir accès à au moins l'une des poignées.
